# EUROPEAN PATENT SPECIFICATION

(11) **EP 1 733 921 B1**
(45) Date of publication and mention of the grant of the patent: **25.01.2012**
(21) Application number: 05105403.9
(22) Date of filing: 17.06.2005
(51) Int. Cl.: B60P 7/08

(54) **Cargo securing device**
Lastensicherungselement
Dispositif de sécurisation de cargaison

(43) Date of publication of application: 20.12.2006
(73) Proprietor: Volvo Car Corporation, 405 31 Göteborg (SE)
(72) Inventor: Rodskier, Christian, 423 40 Torslanda (SE)
(74) Representative: Bergquist, Kjell Gunnar

(56) References cited:
- EP-A- 0 159 394
- EP-A- 1 108 608
- FR-A- 2 675 442
- US-A- 3 722 910
- US-A- 6 164 882

## Description

### TECHNICAL FIELD

This invention relates to a cargo securing means for fastening of cargo with e.g. ropes during transport. In particular, the invention relates to a cargo securing means arranged in a cargo space in vehicles, such as station cars, vans, trucks and similar.

### BACKGROUND ART

In a number of situations it is important to fasten cargo in a secure way during transport to avoid damages or accidents. Cargo securing system should generally be easy to handle, capable of carrying a sufficient load and be out of the way when not in use. Several variants of cargo securing systems for vehicles where e.g. a rope is tied to an attachment point, such as an eye, ring or hook, have been presented in the past. Some of these systems, such as the ones disclosed in US4741653 and US6468009, make use of stationary eyes or rings. Such systems may be advantageous with regard to load-carrying capability but since the point(s) of attachment cannot be moved these systems cannot be adjusted to a particular cargo. Other systems, such as the one disclosed in US6592310, make use of an eye or ring that is slidably moveable along a rail to certain positions where it can be locked into holes or slots in the rail. Although such an arrangement is more flexible than a stationary variant, the position of the eye can still not be freely chosen. Further, such systems are prone to be relatively costly to produce. US4460116 discloses a relatively flexible variant where a "tie down/positioning member" can be clamped to the rail at most positions. However, this arrangement appears to have a relatively weak structure in general and it can only carry very small loads in a direction along the rail. Further, the arrangement is rather complex. Among the systems presented in the past there are a number of examples of retractable eyes or rings; in US4741653, US3722910and US4460116 a pivotally arranged arm can be pivoted between a lower and an upper position; in US6468009 a "pop-up tie down device" is moveable upwards from a retracted position.

### DISCLOSURE OF INVENTION

The object of this invention is to provide a flexible cargo securing device and system that exhibit improved clamping properties compared to conventional cargo securing means. This object is achieved by the technical features contained in claim 1, 18 and 19. The dependent claims contain advantageous embodiments, further developments and variants of the invention.

The invention concerns a cargo securing device for use with a guiding rail, said cargo securing device comprising an arm member having an upper portion intended for receiving a fastening member, such as a rope, a pivot member allowing the arm member to pivot between a first, lower position in which the cargo securing device is slidably moveable along the guiding rail and a second, raised position in which the upper portion of the arm member at least partly extends above the guiding rail, and a clamping means arranged to interact with clamping surfaces of the guiding rail as to prevent movement of the cargo securing device when the arm member is in its second, raised position. The invention is characterized in that the clamping means comprises a wedge-shaped clamping part adapted to interact in a wedging manner with a corresponding, wedge-shaped clamping surface of the guiding rail.

Such a design has several advantageous effects. Firstly, a wedged clamping means according to the invention is not just suitable for carrying a load directed in a transverse direction relative to the rail, it is also capable of carrying a significant load directed along the rail. This gives the inventive cargo securing device a higher strength compared to conventional slidable cargo securing means, which in turn makes it safer to use. Additionally, it becomes less important to position the device properly which in turn makes it more easy to use. Secondly, using a wedging effect for holding the device in place makes it possible to give both the securing device and the rail a simple and robust design. One example is that a wedged clamping means stabilizes the construction since an open structure, a U-shaped rail, becomes a closed structure when the wedged clamping means is engaged. Another example is that the cross section of the rail does not have to vary in a longitudinal direction of the rail which simplifies its production. Thirdly, the cargo securing device can be clamped to the guiding rail at any position along a clamping surface extending in a rail which increases the flexibility and makes it further easy to use.

In a first advantageous embodiment of the invention the clamping means comprises a lower clamping part adapted to interact with a lower clamping surface of the guiding rail and an upper clamping part adapted to interact with an upper clamping surface of the guiding rail. Preferably, the upper clamping part is wedge-shaped. Such a design is simple and by locating the wedge at an upper part of the guiding rail the construction is further stabilized.

In a second advantageous embodiment of the invention the pivot member has a non-circular cross section that extends a first distance in a first direction and a second distance in a second direction, wherein, when the arm member is positioned in its first, lower position in the guiding rail, the first direction substantially corresponds to a longitudinal axis of the guiding rail and the second direction corresponds to a direction that differ from that of the longitudinal axis of the guiding rail, wherein the first distance is longer than the second distance. Preferably, the second direction is substantially perpendicular to the first direction. An advantageous effect of this non-circular cross section is that a vertical force can be created when turning the arm member from the first to the second position. This force can be used to engage the wedged clamping means.

In a third advantageous embodiment of the invention the cargo securing device is provided with a supporting member that is adapted to interact with a supporting surface of the guiding rail when the arm member is in its second, raised position, and that the supporting member is displaced a distance in a longitudinal direction of the guiding rail in relation to the pivot member when the arm member is in its second, raised position. An advantageous effect of this design is that a lever function is formed that makes the cargo securing device further capable of carrying a load directed along the guiding rail from the pivot member towards the supporting member. When such a load is applied to the device it is clamped, i.e. wedged, even harder to the rail.

### BRIEF DESCRIPTION OF DRAWINGS

In the description of the invention given below reference is made to the following figure, in which:
- Figure 1: shows, in a perspective view, a first preferred embodiment of the inventive cargo securing device installed in a guiding rail in a first, lower position,
- Figure 2: shows, in a perspective view, the first preferred embodiment of the inventive cargo securing device installed in a guiding rail in a second, raised position,
- Figure 3: shows, in a perspective view, the first preferred embodiment of the inventive cargo securing device according to figure 2, wherein the guiding rail is indicated by stepped lines,
- Figure 4: shows, in a sectional side view, the first preferred embodiment of the inventive cargo securing device installed in a guiding rail in the first, lower position,
- Figure 5: shows, in a sectional side view, the first preferred embodiment of the inventive cargo securing device installed in a guiding rail in the second, raised position,

- Figure 6: shows, in a front view, the first preferred embodiment of the inventive cargo securing device installed in a guiding rail in the second, raised position,
- Figure 7: shows, in a perspective view, a second preferred embodiment of the inventive cargo securing device installed in a guiding rail in the second, raised position,
- Figure 8: shows, in a perspective view, a third preferred embodiment of the inventive cargo securing device in the second, raised position, wherein the guiding rail is indicated by stepped lines,
- Figure 9: shows, in a sectional side view, the third preferred embodiment of the inventive cargo securing device installed in a guiding rail in a first, lower position,
- Figure 10: shows, in a sectional side view, the third preferred embodiment of the inventive cargo securing device installed in a guiding rail in a second, raised position,
- Figure 11: shows, in a front view, the third preferred embodiment of the inventive cargo securing device installed in a guiding rail in a second, raised position, and
- Figure 12: shows, in a perspective view, a preferred embodiment of a cargo securing system according to the invention.

### EMBODIMENT(S) OF THE INVENTION

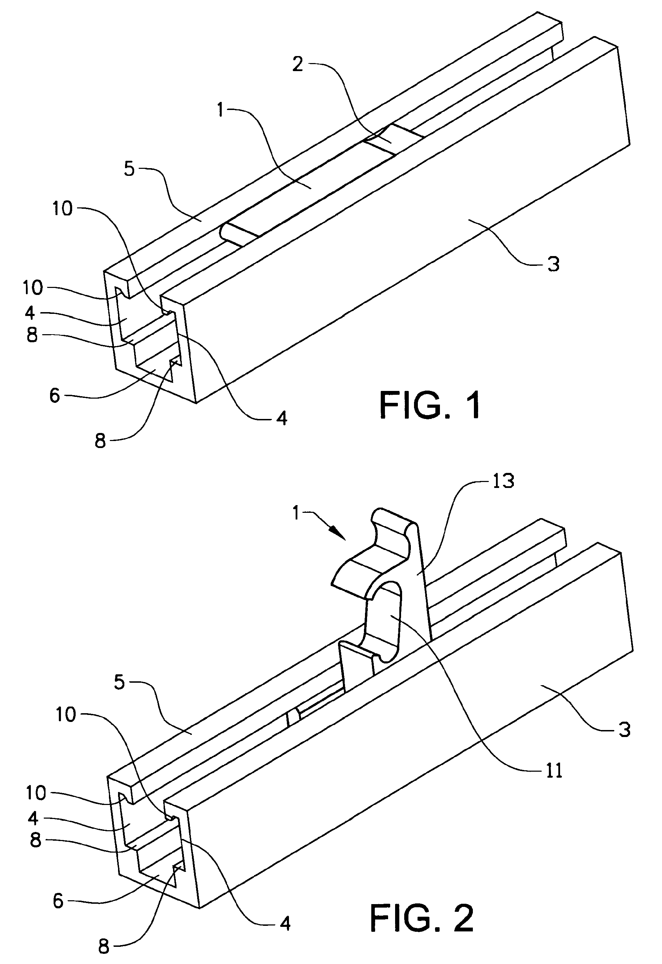

A first advantageous embodiment of the inventive cargo securing device 1 will now be described with reference to figures 1-6. Figures 1 and 2 show the cargo securing device 1 mounted to a guiding rail 3. In figure 1 the cargo securing device 1 is in a first, lower position and in figure 2 it is in a second, raised position. In the first, lower position the cargo securing device 1 is flush with an upper side 5 of the guiding rail 3. A particular advantage of this is that if the guiding rail 3 is positioned such that its upper side is flush with a surrounding surface, e.g. a floor in a cargo space or a luggage compartment, the surface will be free from upwardly protruding parts. Further, in this first, lower position the cargo securing device 1 is slidably moveable along the guiding rail. When the cargo securing device 1 is in the second, raised position as shown in figure 2 an upper portion 13 of an arm member 9 extends above the guiding rail 3 making an open aperture 11 in the form of a hook accessible for a fastening member, such as a rope. In this second, raised position the cargo securing device 1 is locked by clamping means to the guiding rail 3 as to prevent movement of the cargo securing device 1. The cargo securing device 1 can be locked at any position along the guiding rail 3. A recess 2 in a lower portion 12 of the arm member 9 facilitates a turning of the cargo securing device 1 to its second, upper position.

As shown in e.g. figures 1, 2 and 6 the guiding rail 3 has two walls 4, a supporting surface 6 in the form of a bottom of the guiding rail 3, as well as lower and upper clamping surfaces 8, 10 protruding from each wall 4. When the cargo securing device 1 is in its first, lower position it is slidably moveable on the lower clamping surfaces 8 along the guiding rail. When the cargo securing device 1 is raised to its second position it is clamped between the lower and the upper clamping surfaces 8, 10. The lower and upper clamping surfaces 8, 10, of which the latter are wedge-shaped, are adapted to interact with a clamping means 7 associated with the cargo securing device 1. The clamping means 7 is further described below.

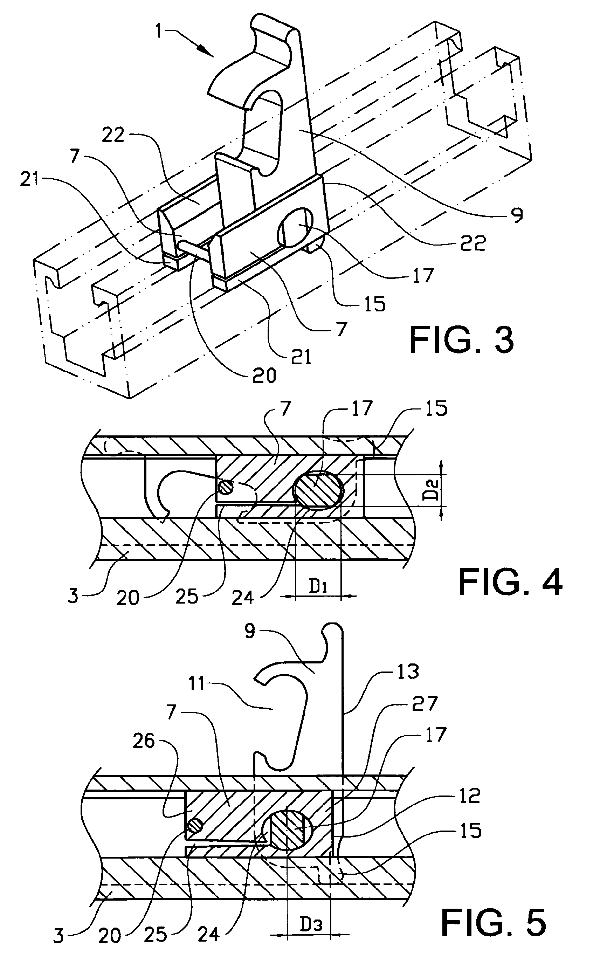

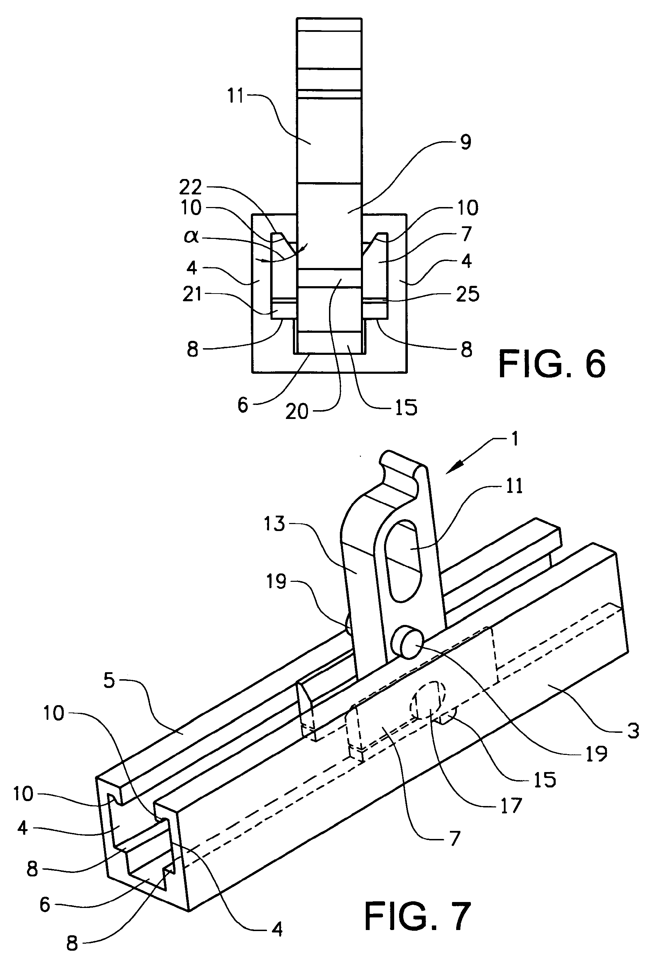

Figure 3 shows a perspective view of the cargo securing device 1 in its second, raised position where the guiding rail 3 is indicated by stepped lines to make it "transparent" as to clearly show the cargo securing device 1. Figures 4 and 5 show a sectional side view along a longitudinal axis of the guiding rail 3 with the device 1 in its first and second position, respectively. Figure 6 shows a sectional front view perpendicular to figure 5.

Figures 3-6 show that the cargo securing device 1 comprises an arm member 9 having an upper portion 13 provided with a hook 11, intended for receiving e.g. a rope, and a lower portion 12 provided with a supporting member 15. A pivot member 17 extends from the arm member 9 allowing the arm member 9 to pivot between a first, lower position and a second, raised position, corresponding to the first and second positions of the cargo securing device 1. The pivot member 17 has a non-circular cross section that extends over a longer distance D1 in a direction corresponding to a longitudinal axis of the guiding rail 3 than over a distance D2 corresponding to a vertical direction to the guiding rail 3 when the arm member 9 is in its first, lower position, see figure 4. Consequently, the length of the vertical cross section of the pivot member 17 increases as the arm member 9 is pivoted to its second, raised position, which in this embodiment is a vertical position in relation to the guiding rail 3. This has the effect that a vertical force can be created while raising the arm member 9 to its second position, which force in this case is used to hold the arm member 9 in its second, raised position and to clamp the cargo securing device 1 between the lower and upper clamping surfaces 8, 10 of the guiding rail 3. One can say that the cross section of the pivot member 17 expands in a vertical direction as the cargo securing device 1 is raised to its second position. The arm member 9 and the pivot member 17 form one integral part.

In order to clamp and thereby prevent movement of the cargo securing device 1 when it is in its second, raised position the cargo securing device 1 is equipped with a clamping means 7, 7', 21, 22.

The clamping means according to the first embodiment of the invention comprises two blocks 7 arranged on each side of the cargo securing device 1. Each block 7 is provided with lower clamping parts 21, adapted to interact with the lower clamping surfaces 8 of the guiding rail 3, and upper, wedge-shaped, clamping parts 22 adapted to interact with the wedge-shaped upper clamping surfaces 10 of the guiding rail 3. Each block 7 is further provided with an oval opening 24 adapted to receive the pivot member 17, and a slit 25 extending horizontally from the oval opening 24 to a first end 26 of the block 7. The slit 25 allows the part of the block 7 provided with the slit 25 to expand vertically as the arm member 9 is raised to its second position. Thus, the vertical force created while raising the arm member 9 to its second position, and which is due to the non-circular cross section of the pivot member 17, acts via the two blocks 7 onto the lower and upper clamping parts 21, 22 resulting in that the cargo securing device 1 is clamped between the lower and upper clamping surfaces 8, 10 of the guiding rail 3. The opening 24 is positioned closer to a second end 27 of the block 7 than to the first end 26. This way the length of the slit 25 can be increased, and thereby the vertical expansion capability can be increased, for a given total length of the block 7.

When the cargo securing device 1 is in its first, lower position it rests with the lower clamping parts 21 in contact with the lower clamping surfaces 8 of the guiding rail 3 and the upper portion 13 of the arm member 9 in contact with a supporting pin 20. When the cargo securing device 1 is in its second, raised position it is clamped between the lower and upper clamping surfaces 8, 10 of the guiding rail. The upper clamping parts 22 and the upper clamping surfaces 10 interact in a wedging manner as to keep the arm member 9, and thus the cargo securing device 1, in the second, raised position and as to prevent motion of the cargo securing manner along the guiding rail 3, see figure 6. A further advantageous effect of a wedge-lock according to the invention, in particular when it is located at the upper part of the guiding rail 3, is that it stabilizes the construction. When the cargo securing device 1 is in its first, lower position the guiding rail 3 gives the system an open U-shaped structure but when the cargo securing device 1 is raised to its second position the combination of the clamping means 7 and the guiding rail 3 forms a closed, square structure that has a higher structural strength.

The wedge angle α (see figure 6) should be chosen as to give a wedging that is sufficiently strong to hold the cargo securing device 1 in place but that does not lock the device 1 so tight that it becomes difficult to turn it back to its lower position. Which angle to choose depends to a great deal on the friction between the parts involved and, thus, on which materials are used for the parts involved. In many cases a suitable value of the wedge angle α is around 20-30°. With a proper design of the parts involved in the wedging the wedging itself is capable of carrying a considerable load directed along the guiding rail 3, in particular if the load is at least partly directed upwards.

As the cargo securing device 1 is turned on the pivot member 17 towards its second, raised position the movement is, with gradually increasing intensity, counteracted by the wedging effect and finally stopped when the supporting member 15 interacts with the supporting surface 6, in this example the bottom, of the guiding rail 3. Preferably, the components affecting the interaction between the cargo securing device 1 and the guiding rail 3, such as the wedge angle α, the design of the supporting member 15 and the guiding rail 3, are adapted such that the wedging effect is adequate at the point when the supporting member 15 presses firmly onto the supporting surface 6. In the absence of a supporting member 15 the components may be adapted as to give an adequate wedging effect when the arm member 9 exhibit a certain angle relative to the guiding rail 3.

As can be seen in figure 5 the supporting member 15 is displaced a distance D3 in a longitudinal direction of the guiding rail 3 in relation to the pivot member 17 when the arm member 9 is in its second, raised position. This displacement forms a lever function that makes the cargo securing device 1 capable of carrying a relatively heavy load directed along the guiding rail 3 from the pivot member 17 towards the supporting member 15. A further lever function is formed due to the vertical distance between the pivot member 17 and the aperture 11. If a force is applied to the cargo securing device 1 via e.g. a rope attached to the aperture 11, and the force is at least partly directed along the guiding rail 3 from the pivot member 17 towards the supporting member 15, i.e. to the right in figure 5, the cargo securing device 1 will not move along the guiding rail 3 but instead be clamped, i.e. wedged, even harder to the guiding rail 3.

Figure 7 shows a second preferred embodiment of the invention where the upper portion 13 of the arm member 9 on each side is provided with a second supporting member in the form of a plunger 19 and a biasing means (not shown) arranged inside the plunger 19, which biasing means pushes the plunger 19 to an outer position when the arm member 9 is raised sufficiently to allow the plunger 19 to pop-out above the guiding rail 3. With the plunger 19 positioned in its outer position the cargo securing device 1 is further secured in its second, raised position. In similarity with the supporting member 15 described above, the plunger 19 is displaced a distance in a longitudinal direction of the guiding rail 3 in relation to the pivot member 17 when the arm member 9 is in its second, raised position. This displacement forms a lever function that makes the cargo securing device 1 capable of carrying a relatively heavy load directed along the guiding rail 3 from the pivot member 17 towards the plunger 19, i.e. in an oppose direction compared to the case involving the supporting member 15 described above. A further lever function is formed due to the vertical distance between the pivot member 17 and the upper portion 13 of the arm member 9, for instance the aperture 11. If a force is applied to the cargo securing device 1 at the upper portion 13 of the arm member 9, for instance caused by an accidental push onto the arm member 9 or caused via e.g. a rope attached to the aperture 11, which in this second embodiment is a closed ring-like aperture, and the force is at least partly directed along the guiding rail 3 from the pivot member 17 towards the plunger 19, i.e. to the left in figure 7, the cargo securing device 1 will not, neither in this case, move along the guiding rail 3 but instead be clamped, i.e. wedged, even harder to the guiding rail 3. Thus, the plunger 19 together with the supporting member 15 makes the cargo securing device 1 capable of carrying a relatively heavy load in any direction. The force of the biasing means is preferably not larger than to allow the plunger 19 to be pushed back into the arm member 9 by a simple push of a finger at the time when the cargo securing device 1 is to be moved back to its first, lower position. Preferably, a recess (not shown) that is adapted to receive the plunger is formed in each block 7, which recess terminates at a rim (not shown) functioning as a support for the plunger 19, and thereby the arm member 9, when the cargo securing device 1 is in its first, lower position.

In a variant of the invention the plunger 19 forms the only supporting member of the cargo securing device 1. In such a variant the plunger 19 could be displaced in any of the two longitudinal directions with the upper side 5 of the guiding rail 3 functioning as the supporting surface 6.

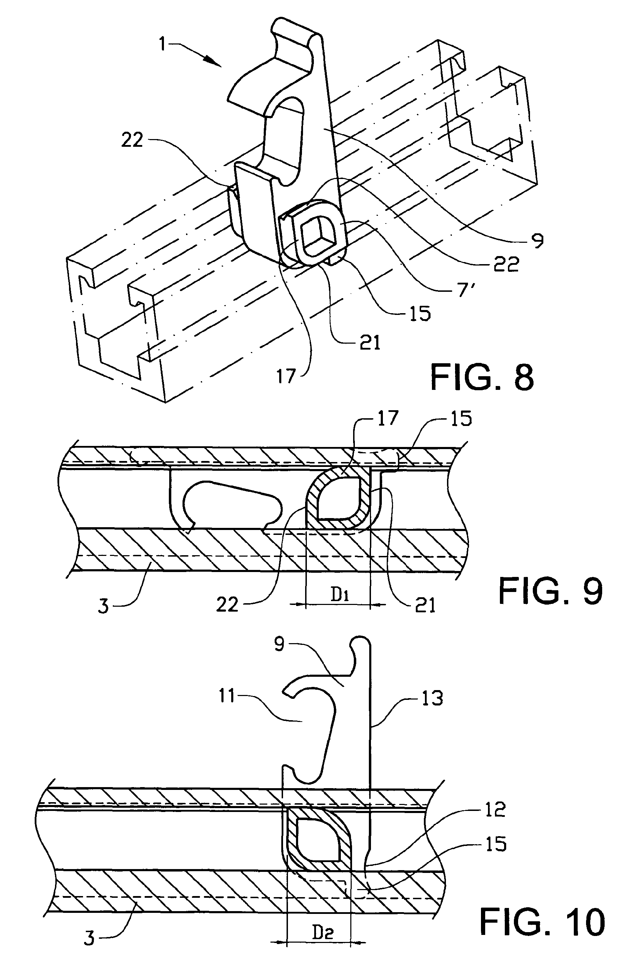

Figures 8-11 show a third advantageous embodiment of the invention where the clamping means 7', i.e. in this case the lower and upper clamping parts 21, 22, is integrally arranged on the pivot member 17 making the whole cargo securing device 1 consist of only one integral part. The arm member 9, with its aperture 11 and supporting member 15, has a similar appearance as in the first two embodiments described above. In principal also the pivot member 17 is similar to what is described above, i.e. it has a non-circular cross section that extends over a longer distance D1 in a direction corresponding to a longitudinal axis of the guiding rail 3 than over a distance D2 corresponding to a vertical direction to the guiding rail 3 when the arm member 9 is in its first, lower position. The consequences and effects of this design, i.e. the creation of a vertical clamping force when the arm member 9 is raised, are thus principally similar. However, in this embodiment the lower clamping parts 21 and the upper wedge-shaped clamping parts 22 are arranged directly onto the pivot member 17.

In any embodiment the supporting member 15 may be provided with a plunger of a type similar to what is described above in relation to the second embodiment. By providing the bottom part of the rail 3 with holes adapted to receive such a plunger one can further secure the device 1 in its second, raised position. However, a drawback of such an arrangement is that the structure of the guiding rail 3 would get more complicated which makes it more costly to produce.

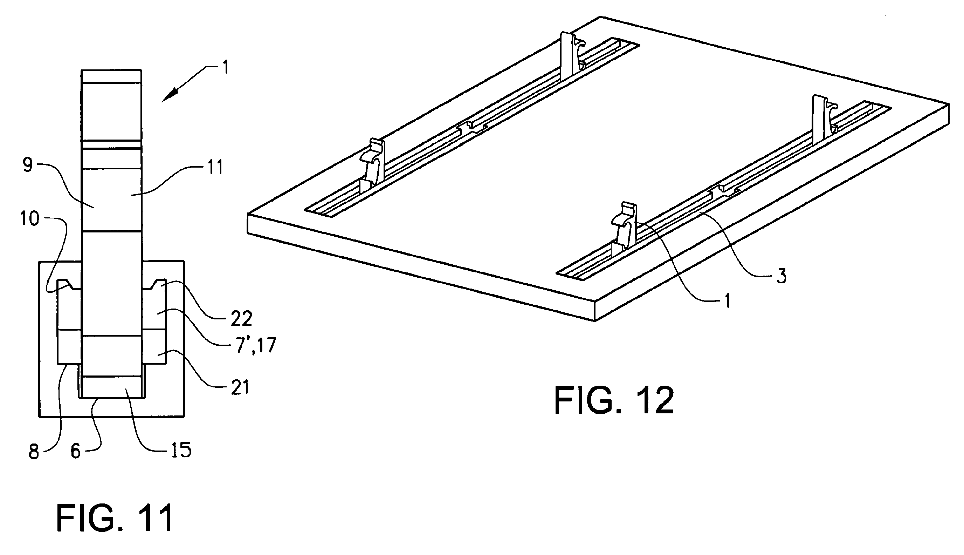

Figure 12 shows an example of a cargo securing system wherein two guiding rails 3, each of which are provided with two cargo securing devices 1, have been installed in a floor of a cargo space. Naturally, cargo securing systems may be installed in other surfaces than a horizontal floor. In the middle of each guiding rail 3 the upper clamping surfaces 10 are removed over a certain distance to make it possible to add or remove cargo securing devices 1 to or from the guiding rails 3.

The inventive cargo securing means described here has several general advantages: it is easy to use, it is flexible since the device 1 can be locked at any position, it can carry a load directed along the rail 3, and it has a relatively uncomplicated structure which reduces production costs.

Various materials, such as steel, aluminium or a plastic material, are suitable both for the cargo securing device 1 and the guiding rail 3. Which material to choose is mainly a matter of production costs and the magnitude of the loads to be carried. The blocks 7 are preferably made out of a plastic material.

The invention is not limited by the embodiments described above but can be modified in various ways within the scope of the claims. For instance, the clamping means may be designed in different ways as long as it allows the securing device 1 to interact in a wedging manner with the guiding rail 3. Any clamping means used is preferably associated with the pivot member 17 in the inventive way such that a vertical clamping force is created and transferred from the pivot member 17 to the clamping means 7, 7' during turning of the arm member 9 from the first to the second position.

It may be noted that a supporting member 15, 19 is not necessary for the invention. However, such a member enhances the capability of carrying a load directed along the guiding rail 3. Further, the displacement of the supporting member 15 forming the distance D3 between the supporting member 15 and the pivot member 17 along the rail 3 may be varied, as well as the distance along which the supporting member 15 and the supporting surface 6 are in contact when the device 1 is in its raised position. The distance D3 may be regarded as the distance from the pivot means 17 to a far end of an edge of the supporting member 15, to which edge applied forces will be concentrated. In contrast to the invention, a small cam centrally located under the pivot means 17 can not carry any significant load directed along the longitudinal axis of the rail 3.

Moreover, the second, raised position of the arm member 9 should be interpreted as a working position, i.e. when a load is applied to the cargo securing device 1.

Further, the aperture 11 may be designed in various ways, e.g. as a hole, a hook or a snap-hook. An opening of a hook should preferably be located at an opposite side of the cargo securing device 1 relative to the supporting member 15 as to show a user in which direction the device 1 is adapted to carry the load.

Moreover, it is not necessary that the arm member 9 and the pivot member 17 form one integral part. The pivot member 17 could be a separate part and the arm member 9 could be provided with an aperture adapted to receive the pivot member 17.

It is further possible to let the second, raised position of the arm member 9 be a non-vertical position, e.g. by extending the lower portion 12 of the arm member 9.

An alternative to the described embodiments is to position the supporting member 15 directly or indirectly onto the pivot member 17 and use the lower clamping surfaces 8 as the supporting surface 6. As mentioned in relation to the second embodiment above also the upper side 5 of the rail 3 can be used as supporting surface 6.

## Claims

1. Cargo securing device (1) for use with a guiding rail (3) having two walls (4) and an upper side (5), said cargo securing device (1) comprising
- an arm member (9) having an upper portion (13) intended for receiving a fastening member, such as a rope,
- a pivot member (17) allowing the arm member (9) to pivot between a first, lower position, in which the upper portion (13) of the arm member (9) is positioned between the walls (4) and at least partly below the upper side (5) of the guiding rail (3) and in which the cargo securing device (1) is slidably moveable along the guiding rail (3), and a second, raised position, in which the upper portion (13) of the arm member (9) is raised and extends above the upper side (5) of the guiding rail (3) such as to make the upper portion (13) of the arm member (9) accessible for a fastening member, and
- a clamping means (7, 7', 21, 22) arranged to interact with clamping surfaces (8, 10) of the guiding rail (3) as to prevent movement of the cargo securing device (1) when the arm member (9) is in its second, raised position,
**characterized in**
**that** the clamping means comprises a wedge-shaped clamping part (22) adapted to interact in a wedging manner with a corresponding, wedge-shaped clamping surface (10) of the guiding rail (3).

2. Cargo securing device (1) according to claim 1,
**characterized in**
**that** the clamping means comprises a lower clamping part (21) adapted to interact with a lower clamping surface (8) of the guiding rail (3) and an upper clamping part (22) adapted to interact with an upper clamping surface (10) of the guiding rail (3).

3. Cargo securing device (1) according to claim 2,
**characterized in**
**that** the upper clamping part (22) is wedge-shaped.

4. Cargo securing device (1) according to claim 2 or 3,
**characterized in**
**that** the clamping means comprises a block (7) provided with said lower and upper clamping parts (21, 22), said block (7) further being provided with an opening (24) adapted to receive the pivot member (17), and a slit (25) extending from the opening (24) to a first end (26) of the block (7).

5. Cargo securing device (1) according to claim 2 or 3,
**characterized in**
**that** the lower and upper clamping parts (21, 22) are arranged onto the pivot member (17).

6. Cargo securing device (1) according to claim 5,
**characterized in**
**that** the lower and upper clamping parts (21, 22) form an integral part of the pivot member (17).

7. Cargo securing device (1) according to anyone of the above claims,
**characterized in**
**that** the pivot member (17) has a non-circular cross section that extends a first distance (D1) in a first direction and a second distance (D2) in a second direction, wherein, when the arm member (9) is positioned in its first, lower position in the guiding rail (3), the first direction substantially corresponds to a longitudinal axis of the guiding rail (3) and the second direction corresponds to a direction that differ from that of the longitudinal axis of the guiding rail (3), wherein the first distance (D1) is longer than the second distance (D2).

8. Cargo securing device (1) according to claim 7,
**characterized in**
**that** the second direction is substantially perpendicular to the first direction.

9. Cargo securing device (1) according to anyone of the above claims,
**characterized in**
**that** the pivot member (17) forms an integral part of the arm member (9).

10. Cargo securing device (1) according to anyone of the above claims,
**characterized in**
**that** the cargo securing device (1) is provided with a supporting member (15, 19) that is adapted to interact with a supporting surface (5, 6) of the guiding rail (3) when the arm member (9) is in its second, raised position, and that the supporting member (15, 19) is displaced a distance (D3) in a longitudinal direction of the guiding rail (3) in relation to the pivot member (17) when the arm member (9) is in its second, raised position.

11. Cargo securing device (1) according to claim 10,
**characterized in**
**that** the supporting member (15) is arranged on a lower portion (12) of the arm member (9).

12. Cargo securing device (1) according to claim 10 or 11,
**characterized in**
**that** the supporting member (15) forms an integral part of the arm member (9).

13. Cargo securing device (1) according to claim 10,
**characterized in**
**that** the supporting member (15) is arranged on the pivot member (17).

14. Cargo securing device (1) according to claim 10 or 13,
**characterized in**
**that** the supporting member (15) forms an integral part of the pivot member (17).

15. Cargo securing device (1) according to anyone of claims 10 to 14,
**characterized in**
**that** the supporting member (15, 19) is adapted to interact with a supporting surface (6) that is located below, in relation to an upper side (5) of the guiding rail (3), a level at which the pivot member (17) is located.

16. Cargo securing device (1) according to anyone of claims 10 to 14,
**characterized in**
**that** the supporting member (15, 19) is adapted to interact with a supporting surface (6) that also forms an upper side (5) of the guiding rail (3).

17. Cargo securing device (1) according to anyone of the above claims,
**characterized in**
**that** the upper portion (13) of the arm member (9) is provided with an aperture (11) for receiving the fastening member.

18. Cargo securing system,
**characterized in**
**that** it comprises a cargo securing device (1) according to anyone of claims 1 to 9 above, and a guiding rail comprising clamping surfaces (8, 10).

19. Cargo securing system,
**characterized in**
**that** it comprises a cargo securing device (1) according to anyone of claims 1 to 17 above, and a guiding rail comprising clamping surfaces (8, 10) and a supporting surface (5, 6).

## Patentansprüche

1. Lastensicherungselement (1) zur Anwendung mit einer Führungsschiene (3) mit zwei Wänden (4) und einer oberen Seite (5), wobei das Lastensicherungselement (1) folgendes umfasst
- ein Armelement (9) mit einem oberen Teil (13), der dafür vorgesehen ist, ein Befestigungselement, wie z.B. ein Seil, aufzunehmen,
- ein Drehelement (17), das dem Armelement (9) ermöglicht, zwischen einer ersten, unteren Position, wo der obere Teil (13) des Armelements (9) zwischen den Wänden (4) und mindestens teilweise unter der oberen Seite (5) der Führungsschiene (3) positioniert ist, und wo sich das Lastensicherungselement (1) gleitend entlang der Führungsschiene (3) bewegen kann, und einer zweiten, gehobenen Position, wo der obere Teil (13) des Armelements (9) gehoben ist und sich über der oberen Seite (5) der Führungsschiene (3) erstreckt, damit der obere Teil (13) des Armeelements (9) zugänglich für ein Befestigungselement ist, zu drehen, und
- ein Klemmmittel (7, 7', 21, 22), das dafür ausgeformt ist, mit Klemmflächen (8, 10) der Führungsschiene (3) zusammen zu wirken, um Bewegung des Lastensicherungselements (1) zu verhindern, wenn das Armelement (9) in seiner zweiten, gehobenen Position ist,
**dadurch gekennzeichnet,**
**dass** das Klemmmittel einen keilförmigen Klemmteil (22) umfasst, der dafür eingerichtet ist, auf abkeilende Art und Weise mit einer entsprechenden, keilförmigen Klemmfläche (10) der Führungsschiene (3) zusammen zu wirken.

2. Lastensicherungselement (1) nach Anspruch 1,
**dadurch gekennzeichnet,**
**dass** das Klemmmittel einen unteren Klemmteil (21), der dafür eingerichtet ist, mit einer unteren Klemmfläche (8) der Führungsschiene (3) zusammen zu wirken, und einen oberen Klemmteil (22), der dafür eingerichtet ist, mit einer oberen Klemmfläche (10) der Führungsschiene (3) zusammen zu wirken, umfasst.

3. Lastensicherungselement (1) nach Anspruch 2,
**dadurch gekennzeichnet,**
**dass** der obere Klemmteil (22) keilförmig ist.

4. Lastensicherungselement (1) nach Anspruch 2 oder 3,
**dadurch gekennzeichnet,**
**dass** das Klemmmittel einen Block (7) umfasst, der mit dem unteren und oberen Klemmteil (21, 22) versehen ist, wobei der Block (7) weiter mit einer Öffnung (24), die dafür eingerichtet ist, das Drehelement (17) aufzunehmen, und einem Schlitz (25), der sich von der Öffnung (24) zu einer ersten Ende (26) des Blocks (7) erstreckt, versehen ist.

5. Lastensicherungselement (1) nach Anspruch 2 oder 3,
**dadurch gekennzeichnet,**
**dass** der untere und obere Klemmteil (21, 22) auf dem Drehelement (17) angeordnet sind.

6. Lastensicherungselement (1) nach Anspruch 5,
**dadurch gekennzeichnet,**
**dass** der untere und obere Klemmteil (21, 22) einen integrierten Teil des Drehelements (17) bilden.

7. Lastensicherungselement (1) nach irgendeinem der obenstehenden Ansprüche,
**dadurch gekennzeichnet,**
**dass** das Drehelement (17) einen nicht-kreisrunden Querschnitt aufweist, der sich in einer ersten Distanz (D1) in einer ersten Richtung und in einer zweiten Distanz (D2) in einer zweiten Richtung erstreckt, wobei, wenn das Armelement (9) in seiner ersten, unteren Position in der Führungsschiene (3) positioniert ist, die erste Richtung im Wesentlichen einer Längsachse der Führungsschiene (3) entspricht, und die zweite Richtung einer Richtung entspricht, die sich von der der Längsachse der Führungsschiene (3) unterscheidet, wobei die erste Distanz (D1) länger als die zweite Distanz (D2) ist.

8. Lastensicherungselement (1) nach Anspruch 7,
**dadurch gekennzeichnet,**
**dass** die zweite Richtung im Wesentlichen senkrecht zur ersten Richtung ist.

9. Lastensicherungselement (1) nach irgendeinem der obenstehenden Ansprüche,
**dadurch gekennzeichnet,**
**dass** das Drehelement (17) einen integrierten Teil des Armelements (9) bildet.

10. Lastensicherungselement (1) nach irgendeinem der obenstehenden Ansprüche,
**dadurch gekennzeichnet,**
**dass** das Lastensicherungselement (1) mit einem Stützelement (15, 19) versehen ist, das dafür eingerichtet ist, mit einer Stützfläche (5, 6) der Führungsschiene (3) zusammen zu wirken, wenn das Armelement (9) in seiner zweiten, gehobenen Position ist, und dass das Stützelement (15, 19) in einer Distanz (D3) in einer Längsrichtung der Führungsschiene (3) im Verhältnis zum Drehelement (17) verlagert ist, wenn das Armelement (9) in seiner zweiten, gehobenen Position ist.

11. Lastensicherungselement (1) nach Anspruch 10,
**dadurch gekennzeichnet,**
**dass** das Stützelement (15) auf einem unteren Teil (12) des Armelements (9) angeordnet ist.

12. Lastensicherungselement (1) nach Anspruch 10 oder 11,
**dadurch gekennzeichnet,**
**dass** das Stützelement (15) einen integrierten Teil des Armelements (9) bildet.

13. Lastensicherungselement (1) nach Anspruch 10,
**dadurch gekennzeichnet,**
**dass** das Stützelement (15) auf dem Drehelement (17) angeordnet ist.

14. Lastensicherungselement (1) nach Anspruch 10 oder 13,
**dadurch gekennzeichnet,**
**dass** das Stützelement (15) einen integrierten Teil des Drehelements (17) bildet.

15. Lastensicherungselement (1) nach irgendeinem der Ansprüche 10 bis 14,
**dadurch gekennzeichnet,**
**dass** das Stützelement (15, 19) dafür eingerichtet ist, mit einer Stützfläche (6) zusammen zu wirken, die im Verhältnis zu einer oberen Seite (5) der Führungsschiene (3) unter einer Ebene angeordnet ist, in welcher Ebene das Drehelement (17) angeordnet ist.

16. Lastensicherungselement (1) nach irgendeinem der Ansprüche 10 bis 14,
**dadurch gekennzeichnet,**
**dass** das Stützelement (15, 19) dafür eingerichtet ist, mit einer Stützfläche (6), die auch eine obere Seite (5) der Führungsschiene (3) bildet, zusammen zu wirken.

17. Lastensicherungselement (1) nach irgendeinem der obenstehenden Ansprüche,
**dadurch gekennzeichnet,**
**dass** der obere Teil (13) des Armelements (9) mit einem Ausschnitt (11) zur Aufnahme des Befestigungselements versehen ist.

18. Lastensicherungssystem,
**dadurch gekennzeichnet,**
**dass** es ein Lastensicherungselement (1) nach irgendeinem der Ansprüche 1 bis 9 oben und eine Führungsschiene umfassend Klemmflächen (8, 10) umfasst.

19. Lastensicherungssystem,
**dadurch gekennzeichnet,**
**dass** es ein Lastensicherungselement (1) nach irgendeinem der Ansprüche 1 bis 17 oben und eine Führungsschiene umfassend Klemmflächen (8, 10) sowie eine Stützfläche (5, 6) umfasst.

## Revendications

1. Dispositif de sécurisation de cargaison (1) à utiliser avec un rail de guidage (3) présentant deux parois (4) et un côté supérieur (5), ledit dispositif de sécurisation de cargaison (1) comprenant
- un membre de bras (9) ayant une partie supérieure (13) destinée à recevoir un élément de fixation, tel qu'une corde,
- un membre pivotant (17) permettant au membre de bras (9) de pivoter entre une première position inférieure dans laquelle la partie supérieure (13) du membre de bras (9) est positionnée entre les parois (4) et au moins partiellement au-dessous du côté supérieur (5) du rail de guidage (3) et dans laquelle le dispositif de sécurisation de cargaison (1) peut se déplacer de manière coulissante le long du rail de guidage (3), et une deuxième position soulevée dans laquelle la partie supérieure (13) du membre de bras (9) est soulevée et s'étend au-dessus du côté supérieur (5) du rail de guidage (3) afin de rendre la partie supérieure (13) du membre de bras (9) accessible pour un élément de fixation, et
- un moyen de serrage (7, 7', 21, 22) agencé pour interagir avec des surfaces de serrage (8, 10) du rail de guidage (3) pour empêcher le mouvement du dispositif de sécurisation de cargaison (1) lorsque le membre de bras (9) est dans sa deuxième position soulevée,
**caractérisé en ce que**
le moyen de serrage comprend une partie de serrage (22) cunéiforme et adaptée à interagir de manière calage avec une surface de serrage (10) cunéiforme et correspondante du rail de guidage (3).

2. Dispositif de sécurisation de cargaison (1) selon la revendication 1,
**caractérisé en ce que**
le moyen de serrage comprend une partie de serrage (21) inférieure et adaptée à interagir avec une surface de serrage (8) inférieure du rail de guidage (3) et une partie de serrage (22) supérieure et adaptée à interagir avec une surface de serrage (10) supérieure du rail de guidage (3).

3. Dispositif de sécurisation de cargaison (1) selon la revendication 2,
**caractérisé en ce que**
la partie de serrage (22) supérieure est cunéiforme.

4. Dispositif de sécurisation de cargaison (1) selon la revendication 2 ou 3,
**caractérisé en ce que**
le moyen de serrage comprend un bloc (7) pourvu desdites parties de serrage (21, 22), inférieure et supérieure, ledit bloc (7) étant en outre pourvu d'une ouverture (24) adaptée à recevoir le membre pivotant (17), et d'une fente (25) s'étendant depuis l'ouverture (24) à une première extrémité (26) du bloc (7).

5. Dispositif de sécurisation de cargaison (1) selon la revendication 2 ou 3,
**caractérisé en ce que**
les parties de serrage (21, 22), inférieure et supérieure, sont disposées sur le membre pivotant (17).

6. Dispositif de sécurisation de cargaison (1) selon la revendication 5,
**caractérisé en ce que**
les parties de serrage (21, 22), inférieure et supérieure, forment une partie intégrante du membre pivotant (17).

7. Dispositif de sécurisation de cargaison (1) selon l'une quelconque des revendications précédentes,
**caractérisé en ce que**
le membre pivotant (17) présente une section transversale non circulaire qui s'étend à une première distance (D1) dans une première direction et à une deuxième distance (D2) dans une deuxième direction, dans lequel, lorsque le membre de bras (9) est positionné dans sa première position inférieure dans le rail de guidage (3), la première direction correspond essentiellement à un axe longitudinal du rail de guidage (3) et la deuxième direction correspond à une direction qui diffère de celle de l'axe longitudinal du rail de guidage (3), où la première distance (D1) est plus longue que la deuxième distance (D2).

8. Dispositif de sécurisation de cargaison (1) selon la revendication 7,
**caractérisé en ce que**
la deuxième direction est sensiblement perpendiculaire à la première direction.

9. Dispositif de sécurisation de cargaison (1) selon l'une quelconque des revendications précédentes,
**caractérisé en ce que**
le membre pivotant (17) forme une partie intégrante du membre de bras (9).

10. Dispositif de sécurisation de cargaison (1) selon l'une quelconque des revendications précédentes,
**caractérisé en ce que**
le dispositif de sécurisation de cargaison (1) est pourvu d'un membre de soutien (15, 19) qui est adapté à interagir avec une surface d'appui (5, 6) du rail de guidage (3) lorsque le membre de bras (9) est dans sa deuxième position soulevée, et que le membre de soutien (15, 19) est déplacé à une distance (D3) dans une direction longitudinale du rail de guidage (3) par rapport au membre pivotant (17) lorsque le membre de bras (9) est dans sa deuxième position soulevée.

11. Dispositif de sécurisation de cargaison (1) selon la revendication 10,
**caractérisé en ce que**
le membre de soutien (15) est disposé sur une partie inférieure (12) du membre de bras (9).

12. Dispositif de sécurisation de cargaison (1) selon la revendication 10 ou 11,
**caractérisé en ce que**
le membre de soutien (15) forme une partie intégrante du membre de bras (9).

13. Dispositif de sécurisation de cargaison (1) selon la revendication 10,
**caractérisé en ce que**
le membre de soutien (15) est disposé sur le membre pivotant (17).

14. Dispositif de sécurisation de cargaison (1) selon la revendication 10 ou 13,
**caractérisé en ce que**
le membre de soutien (15) forme une partie intégrante du membre pivotant (17).

15. Dispositif de sécurisation de cargaison (1) selon l'une quelconque des revendications 10 à 14,
**caractérisé en ce que**
le membre de soutien (15, 19) est adapté à interagir avec une surface d'appui (6) qui est placée au-dessous, par rapport à un côté supérieur (5) du rail de guidage (3), d'un niveau auquel le membre pivotant (17) est situé.

16. Dispositif de sécurisation de cargaison (1) selon l'une quelconque des revendications 10 à 14,
**caractérisé en ce que**
le membre de soutien (15, 19) est adapté à interagir avec une surface d'appui (6) qui forme également un côté supérieur (5) du rail de guidage (3).

17. Dispositif de sécurisation de cargaison (1) selon l'une quelconque des revendications précédentes,
**caractérisé en ce que**
la partie supérieure (13) du membre de bras (9) est pourvue d'une ouverture (11) pour recevoir l'élément de fixation.

18. Système de sécurisation de cargaison,
**caractérisé en**
**ce qu'**il comprend un dispositif de sécurisation de cargaison (1) selon l'une quelconque des revendications 1 à 9 ci-dessus, et un rail de guidage comportant des surfaces de serrage (8, 10).

19. Système de sécurisation de cargaison,
**caractérisé en**
**ce qu'**il comprend un dispositif de sécurisation de cargaison (1) selon l'une quelconque des revendications 1 à 17 ci-dessus, et un rail de guidage comportant des surfaces de serrage (8, 10) et une surface d'appui (5, 6).
